# FASCICULE DE BREVET EUROPEEN

(11) **EP 1 935 149 B1**
(45) Date de publication et mention de la délivrance du brevet: **28.09.2011**
(21) Numéro de dépôt: 06820265.4
(22) Date de dépôt: 09.10.2006
(51) Int. Cl.: H04L 12/56, H04W 4/14

(54) **PROCEDE ET SYSTEME DE NOTIFICATION DE RECEPTION DE MESSAGES ASYNCHRONES**
VERFAHREN UND SYSTEM ZUR BENACHRICHTIGUNG EINES EMPFANGS ASYNCHRONER NACHRICHTEN
METHOD AND SYSTEM FOR NOTIFYING A RECEIPT OF ASYNCHRONOUS MESSAGES

(30) Priorité: 10.10.2005 FR 0510313
(43) Date de publication de la demande: 25.06.2008
(73) Titulaire: FRANCE TELECOM, 75015 Paris (FR)
(72) Inventeur: BRUN, Arnaud, F-92100 Boulogne Billancourt (FR); ROUVIERE, Céline, F-01480 Chaleins (FR)
(74) Mandataire: Desormiere, Pierre-Louis
(86) Numéro de dépôt international: PCT/FR2006/051003
(87) Numéro de publication internationale: WO 2007/042720

(56) Documents cités:
- WO-A-2004/056073
- US-A1- 2004 148 400

## Description

### Domaine de l'invention

La présente invention se rapporte au domaine des messages échangés de manière asynchrone entre des terminaux tels que les messages MMS échangés entre des téléphones mobiles. Elle concerne plus particulièrement la manière de notifier sur le terminal du destinataire la réception de ce type de message.

### Art antérieur

Actuellement, lorsque le terminal (mobile ou fixe) d'un utilisateur reçoit un message de type message multimédia MMS ou autre (ex. message SMS), il informe l'utilisateur de la réception du message pour que ce dernier le consulte. A cet effet, selon les fonctionnalités disponibles sur le terminal de l'utilisateur qui reçoit le message et selon la configuration qu'il a choisie, plusieurs comportements du terminal sont possibles. Parmi les fonctionnalités actuellement disponibles sur les terminaux du commerce, on trouve:
- la sonnerie et/ou la vibration du terminal (la sonnerie pouvant éventuellement varier selon le numéro de l'émetteur du message),
- l'affichage à l'écran du terminal d'une icône,
- l'affichage à l'écran du terminal d'un texte (ex. "Nouveau Message"),
- l'affichage à l'écran du terminal du numéro de l'émetteur du message, et/ou
- l'affichage du nom et/ou de la photo/image correspondant au numéro de l'émetteur du message et stocké(e) dans le répertoire du terminal.

Dans tous les cas, c'est l'utilisateur du terminal destinataire qui définit, en local sur son terminal, le mode de notification de la réception d'un nouveau message sur son terminal, et ce selon les fonctionnalités offertes par celui-ci.

Aujourd'hui, il n'existe pas de solution permettant à l'émetteur du message (MMS, SMS ou autre), et non le destinataire de celui-ci, de définir lui-même le mode de notification de réception du message qu'il envoie.

Le document WO 2004/056073 décrit un système dans lequel l'émetteur d'un appel radiotéléphonique peut notifier son appel en envoyant un message de notification à destination de l'utilisateur qu'il appelle. Cependant, le système décrit dans ce document s'applique uniquement à la notification de services synchrones tels que les appels téléphoniques. Il ne permet pas une personnalisation de la notification de réception de messages MMS ou SMS qui dépendent de services asynchrones. Le système décrit dans le document WO 2004/056073 est relativement complexe et nécessite de profondes modifications matérielles dans les systèmes de télécommunications existants. Cette complexité s'explique notamment par le fait que le système décrit a pour objet de permettre la notification de services synchrones, ce qui implique que le message de notification soit transmis quasi-simultanément avec l'appel.

### Objet et description succincte de l'invention

La présente invention a pour objet de pallier ces inconvénients en proposant une solution permettant à l'émetteur du message de définir lui-même la manière dont la réception du message sera notifiée sur le terminal du destinataire du message.

Ce but est atteint grâce à un procédé de notification de la réception d'un message comprenant une étape de composition d'un message MMS à partir d'un premier terminal et une étape d'envoi du message MMS à au moins un second terminal, caractérisé en ce qu'il comprend en outre, avant l'étape d'envoi dudit message MMS, une étape d'insertion d'une page (SLn) contenant au moins un élément de notification (ENn) dans ledit message MMS à partir du premier terminal et, après l'étape d'envoi dudit message, une étape de notification de réception dudit message MMS sur le second terminal au moyen de l'élément de notification inséré dans le message.

Ainsi, en insérant un élément de notification dans le message envoyé, l'émetteur du message peut choisir lui-même la manière dont l'arrivée de ce message sera notifiée sur le terminal du destinataire. La solution apportée par la présente invention consiste à enrichir le contenu du message que souhaite envoyer l'utilisateur, dans le cas d'envoi de messages interpersonnels. Le message envoyé contient donc à la fois la partie "utile" du message (l'information que souhaite envoyer l'utilisateur) et la partie contenant les éléments multimédias qui sont utilisés par le terminal destinataire pour notifier son utilisateur de l'arrivée de ce message.

Selon un aspect de l'invention, le procédé comprend, avant l'étape d'insertion de l'élément de notification dans le message, une étape de formation de l'élément de notification qui est réalisée par sélection ou création d'un ou plusieurs éléments multimédias à partir du premier terminal. L'émetteur peut personnaliser la notification de son message avec un large choix d'éléments multimédias.

Le procédé de l'invention comprend en outre, avant l'étape d'envoi du message MMS, une étape d'ajout d'un champ de notification dans l'en-tête du message MMS, la notification de réception dudit message MMS sur le second terminal au moyen de l'élément de notification étant réalisée en fonction de la valeur du champ ajouté dans l'en-tête du message. Cette étape est réalisée de façon transparente pour l'utilisateur et permet d'indiquer à la réception du message la présence d'une page (SLn) à traiter de façon particulière pour activer un élément de notification dans le message.

Le procédé selon l'invention peut comprendre en outre une étape d'interrogation du second terminal par le centre MMS pour vérifier la capacité dudit terminal à notifier la réception du message au moyen de l'élément de notification inséré dans le message et une étape de suppression de l'élément de notification dans le message MMS par le centre MMS en cas de vérification négative. De cette façon, l'élément de notification n'est transmis que lorsqu'il peut être exploité par le terminal destinataire.

L'invention s'applique aussi à d'autres types de messages tels que les messages SMS. Dans ce cas, le corps du message MMS comprend un élément correspondant au texte du message SMS.

La présente invention concerne également un système de notification de la réception d'un message comprenant au moins deux terminaux entre lesquels sont échangés des messages MMS via au moins un centre MMS, caractérisé en ce que les terminaux comprennent des moyens pour insérer un élément de notification dans un message MMS et des moyens pour notifier la réception dudit message sur un terminal destinataire en utilisant l'élément de notification transmis avec le message MMS.

Comme pour le procédé décrit précédemment, le système de l'invention apporte une solution à l'émetteur d'un message pour lui permettre de définir la façon dont sera notifiée la réception d'un message sur le terminal du destinataire.

Les terminaux comprennent en outre des moyens pour ajouter un champ de notification dans l'en-tête du message MMS et des moyens pour détecter le champ de notification à la réception du message, la notification de réception dudit message MMS sur le terminal destinataire au moyen de l'élément de notification étant réalisée en fonction de la valeur du champ ajouté dans l'en-tête du message.

Selon un aspect de l'invention, le centre MMS comprend des moyens pour vérifier la capacité du terminal destinataire à notifier la réception du message au moyen de l'élément de notification inséré dans le message MMS et des moyens pour supprimer l'élément de notification dans le message MMS en cas de vérification négative.

La présente invention concerne encore un programme client MMS destiné à être embarqué sur un terminal comprenant des instructions pour permettre la composition, l'envoi et la réception de messages MMS, caractérisé en ce qu'il comprend en outre des instructions pour insérer un élément de notification dans un message MMS. Le programme comprend en outre des instructions pour notifier la réception d'un message MMS sur le terminal en utilisant l'élément de notification transmis avec le message MMS. Il comprend en outre des instructions pour ajouter automatiquement un champ de notification dans l'en-tête du message MMS et pour notifier son arrivée en fonction de la valeur du champ de notification.

Un tel client MMS, une fois embarqué dans un terminal, offre à son utilisateur les outils pour personnaliser la notification de réception des messages qu'il envoie et pour notifier la réception des messages qu'il reçoit avec l'élément de notification inclut dans ces derniers.

Enfin, l'invention se rapporte aussi à un terminal mobile ou fixe comprenant un programme client MMS tel que décrit précédemment.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique d'une architecture réseau dans laquelle sont mis en oeuvre un système et un procédé de notification de réception de message conformément à l'invention,
- la figure 2 montre la structure d'un message multimédia MMS,
- la figure 3 est un ordinogramme d'un mode de mise en oeuvre d'un procédé de transmission d'un message avec élément de notification personnalisé conformément à un mode de réalisation de l'invention,
- la figure 4 est un ordinogramme montrant les étapes réalisées lors de l'émission d'un message MMS avec notification personnalisée à partir du terminal de l'émetteur conformément à l'invention,
- la figure 5 est un ordinogramme montrant les étapes réalisées lors de la réception par le terminal du destinataire d'un message MMS avec notification personnalisée conformément à l'invention,
- la figure 6 est un ordinogramme montrant les étapes réalisées par un centre MMS lors de la transmission d'un message MMS avec notification personnalisée au terminal du destinataire conformément à l'invention.

### Description détaillée des modes de réalisation de l'invention

La présente invention propose une solution pour permettre à un utilisateur émetteur d'un message de définir la manière dont la réception d'un message sur le terminal du destinataire sera notifiée. A cet effet, l'invention utilise la technologie connue du service de messagerie multimédia dite MMS ("Multimedia Messaging Service"). Par souci de simplification, la plupart des éléments utilisés dans la présente invention et relevant de cette technologie seront qualifiés avec le terme MMS (ex. message MMS).

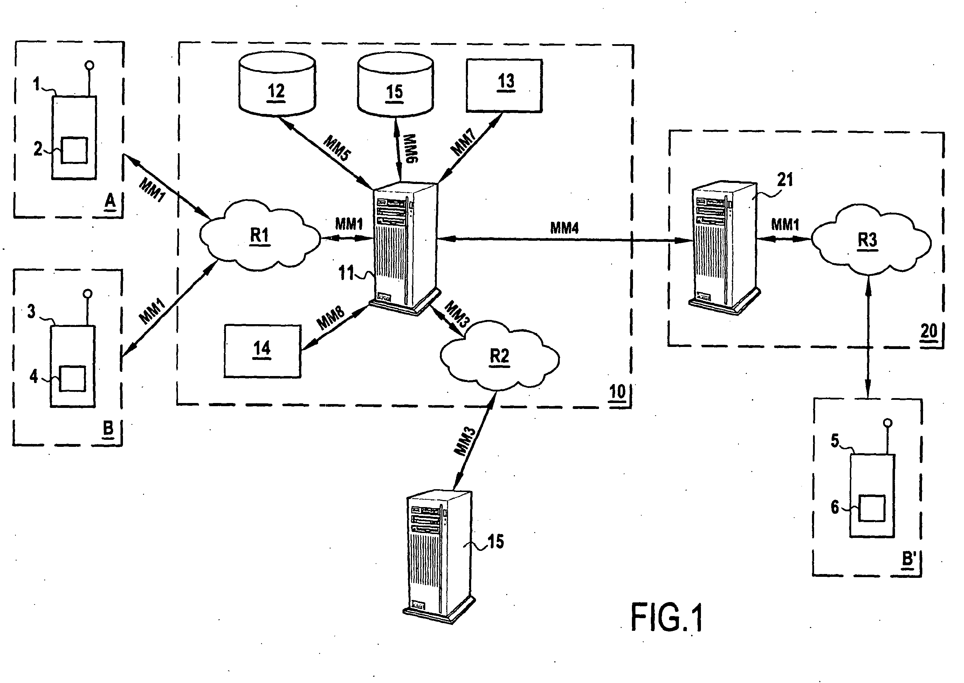

La figure 1 illustre une architecture d'un système d'échange de messages MMS dans laquelle l'invention peut être mise en oeuvre. De façon connue, cette architecture comprend un environnement MMS 10 qui permet l'échange de messages MMS entre un terminal 1 d'un utilisateur A et un terminal 3 d'un utilisateur B tous deux reliés à un réseau de téléphonie mobile R1 (ex. réseau GSM, GPRS ou UMTS). Dans la suite de la description, l'utilisateur A sera considéré comme l'émetteur du message et l'utilisateur B le destinataire de ce message.

L'environnement MMS 10 (désigné généralement sous le terme MMSE pour "MMS Environnement") comprend un centre MMS 11 (encore appelé MMSC pour "MMS-Center") qui gère le routage des messages MMS aussi bien dans l'environnement MMS 10 que vers d'autres environnements 20 ou d'autres serveurs de messagerie 15. Le centre MMS 11 a également la charge de stocker les messages en attente de délivrance sur un terminal de l'environnement. La fonction de routage ("MMS relay") et la fonction de stockage ("MMS server") peuvent être implémentées dans des équipements distincts ou être intégrées dans un même équipement tels que dans le centre MMS 11 du système de la figure 1. De façon connue, le centre MMS est essentiellement constitué d'un ou plusieurs serveurs comprenant des modules (logiciels) permettant le traitement des messages MMS (ex. routage, stockage, adaptation).

Le centre MMS 11 est en outre en liaison avec des services à valeur ajoutée 13 ("VAS Applications"), une base de données 12 pour la gestion des abonnés et de leur localisation (HLR pour "Home Location Register"), des systèmes de facturation 14, et des bases de données 15 d'informations sur les utilisateurs MMS (ex. informations de présence). Le centre MMS a encore pour fonction l'adaptation des messages MMS en fonction des capacités du terminal destinataire. En effet, avant de télécharger un message sur le terminal destinataire à partir du centre MMS, ce dernier interroge le terminal destinataire pour identifier ses capacités (ex. taille écran, résolution image, etc.) et éventuellement adapter le contenu du message en fonctions des capacités identifiées. L'adaptation du contenu est réalisée par le centre MMS au moyen d'un module d'adaptation qui est un élément logiciel programmé dans le centre MMS.

Ces éléments réseau sous le contrôle d'un fournisseur de service de messagerie multimédia ("MMS content provider") permettent l'accès aux services MMS à des utilisateurs abonnés via un réseau de télécommunication (ex. réseau R1 de la figure 1). Ainsi, l'environnement MMS 10 comprend une infrastructure réseau apte à transporter, adapter et stocker les messages MMS ainsi que les éléments logiciels permettant la composition, l'envoi et la réception de messages MMS, tant au niveau des terminaux que du réseau.

Les différentes entités d'un système d'échange de messages MMS communiquent à travers un ensemble d'interfaces dédiées, à savoir:
- L'interface MM1 qui permet l'échange entre un client MMS embarqué sur un terminal et un centre MMS;
- L'interface MM2 est l'interface utilisée entre les entités de routage (MMS relay) et de stockage (MMS server) du centre MMS. La plupart des solutions des fournisseurs intègrent les deux entités dans le même équipement rendant cette interface propriétaire (i.e. non normalisée);
- L'interface MM3 permet à un centre MMS d'échanger des messages avec d'autres serveurs de messagerie (ex. serveur 15 de la figure 1 accessible via un réseau R2 type Internet);
- L'interface MM4 permet l'échange de messages MMS entre deux centres MMS appartenant à deux environnements MMS différents (ex. centres MMS 11 et 21 du système de la figure 1);
- L'interface MM5 permet au centre MMS d'interroger la base de données de gestion des abonnées (ex. base 12 de la figure 1);
- L'interface MM6 permet au centre MMS d'accéder à la base de données (ex. base 15 de la figure 1) d'informations sur les usagers MMS;
- L'interface MM7 permet le transfert de messages MMS d'un centre MMS vers des services à valeur ajoutée (ex. services 13 de la figure 1) et inversement;
- L'interface MM8 permet au centre MMS d'interagir avec les systèmes de facturation (ex. système 14 de la figure 1).

Concernant les terminaux mobiles 1 et 3 aptes à échanger des MMS à travers l'environnement MMS 10, ceux-ci doivent être équipés d'un client MMS 2, respectivement 4 qui est embarqué dans le terminal. Le client MMS (encore appelé MMS-UA pour "MMS User Agent") est un logiciel d'application utilisateur embarqué sur le terminal qui permet la composition, la présentation, l'envoi et la réception des messages MMS. Les clients MMS 2 et 4 sont attachés à un environnement MMS correspondant, ici l'environnement MMS 10, correspondant au réseau R1 (ex. GSM, GPRS ou UMTS) d'abonnement du terminal émetteur et récepteur.

L'environnement de l'émetteur ou du receveur peut être différent comme représenté sur la figure 1 pour un utilisateur B' attaché à un autre environnement 20 correspondant à un autre réseau d'abonnement R3. Dans ce cas, le terminal 5 de l'utilisateur B' contient un client MMS 6 adapté à l'environnement MMS 20. Tout comme pour l'environnement MMS 10 décrit précédemment, l'environnement MMS 20 comprend un centre MMS 21 et tous les autres éléments réseaux (non représentés) nécessaires à la gestion des messages MMS et qui ont déjà été décrits pour l'environnement MMS 10.

L'architecture du système d'échange de messages MMS de la figure 1 est bien connue en soi et ne sera pas décrit plus en détail pour ne pas alourdir inutilement la présente description. On pourra toutefois se reporter notamment aux documents publiés par l'organisme de standardisation pour les systèmes mobiles de troisième génération 3GPP (www.3gpp.org).

La personnalisation de la notification de la réception de messages selon la présente invention doit pouvoir s'intégrer dans des environnements MMS existants. A cet effet, comme décrit plus loin en détail, on ajoute un champ spécifique dans les messages MMS qui, en fonction de sa valeur, va permettre de traiter de façon particulière une page correspondant à la notification (SLn) contenue dans le message et permettant d'activer, sur le terminal du destinataire, la notification définie par l'émetteur du message.

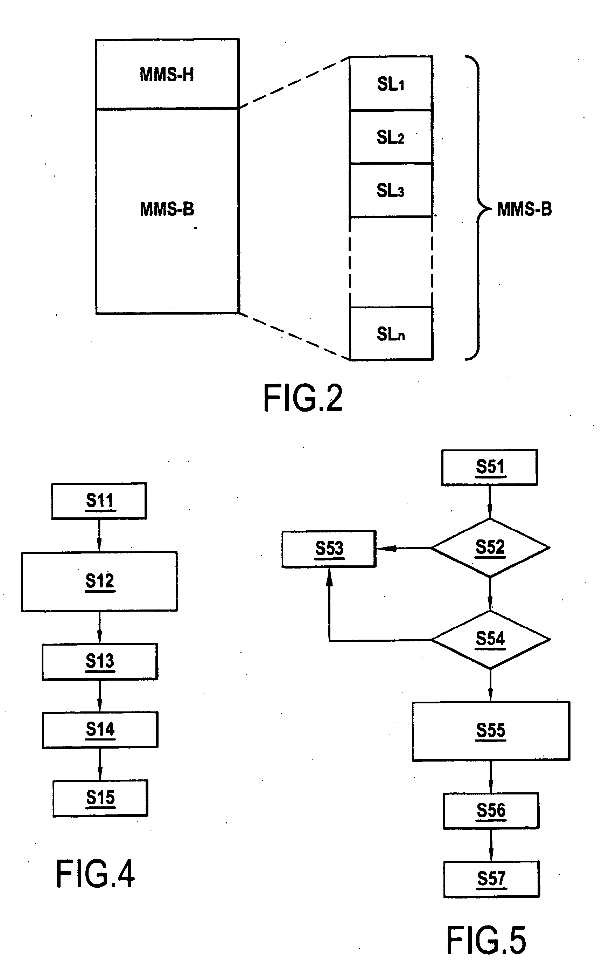

De façon connue et tel qu'illustré sur la figure 2, un message MMS comporte un en-tête MMS-H et un corps MMS-B. L'en-tête MMS-H du message MMS contient des informations relatives au transport du message, telles que, par exemple, l'identification du destinataire, de l'émetteur et des informations relatives au message envoyé (date d'envoi, date de validité du message, objet du message, etc.). Les informations de l'en-tête MMS-H sont organisées selon des champs auxquels sont attribuées des valeurs.

Le corps MMS-B du message peut contenir une ou plusieurs pages SL1 à SLn couramment appelés "slides". Dans un message, les pages ("slides") sont en général définis en langage "SMIL" (Synchronized Multimedia Intégration Language) normalisé, ce langage permettant la synchronisation des différents éléments contenus dans le message. Les "slides" peuvent éventuellement être définis par un langage spécifique au terminal.

Chacune des pages SL1 à SLn du corps d'un message MMS contient un ou plusieurs éléments multimédia tels qu'un son, une image, un texte, etc. Le corps d'un message MMS est, par conséquent, composé d'une succession de pages SL1 à SLn chacune comprenant un ou plusieurs éléments multimédia (son, image, texte, etc.), la nature de chacun étant déterminée par un identifiant.

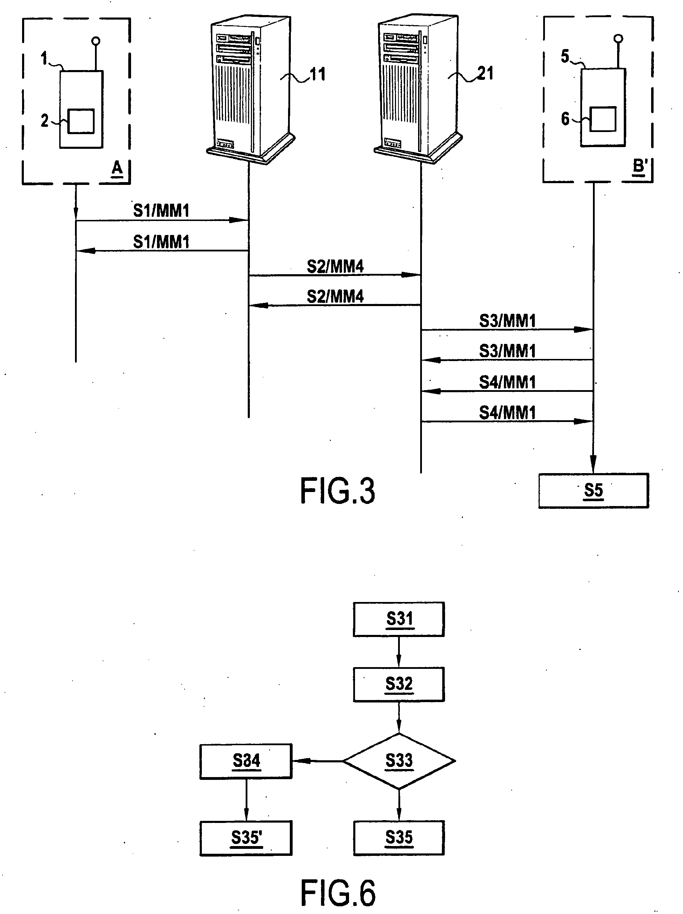

On décrit maintenant en relation avec la figure 3 un exemple de mise en oeuvre du procédé d'envoi d'un message avec personnalisation, par l'émetteur, de la notification de réception du message sur le terminal du destinataire conformément à l'invention. Dans cet exemple, l'utilisateur A de la figure 1 envoie un message MMS à l'utilisateur B'.

La première étape (étape S1) consiste à composer et à envoyer un message MMS.

Plus précisément et tel qu'illustré sur la figure 4, l'utilisateur A compose de manière classique sur son terminal un message MMS M1 qu'il souhaite envoyer à un utilisateur B' (étape S11). Cette opération consiste pour l'utilisateur à renseigner l'adresse de l'utilisateur destinataire du message et à éditer les éléments multimédias qu'il souhaite transmettre avec le message.

Après cette composition, l'utilisateur A définit la manière dont le terminal. 5 du destinataire B' notifiera la réception de ce message M1 à son utilisateur. Il peut pour cela sélectionner un ou plusieurs éléments multimédias ENn qui vont constituer l'élément de notification de l'invention (étape S12). Ce ou ces éléments peuvent être par exemple choisis parmi les éléments suivants:
- une sonnerie (ou plus généralement n'importe quel élément audio) qui sera jouée par le terminal B,
- une photo/image ou un avatar qui sera affiché(e) à l'écran du terminal B',
- une vidéo ou une animation qui sera jouée par le terminal B',
- un texte qui sera affiché à l'écran du terminal B'.

Ces éléments multimédias peuvent être déjà disponibles en local sur le terminal A ou être directement générés par l'utilisateur A lors de la création du message MMS M1 (ex. création et enregistrement d'un son ou photo à partir du terminal).

A la suite de la sélection de ces éléments multimédias, lorsque l'utilisateur A choisit d'envoyer son message (i.e. lorsqu'il appuie sur le bouton *"Envoyer"* par exemple), le client MMS 2 du terminal A effectue l'ajout (de manière transparente pour l'utilisateur) d'une nouvelle page (nouveau "slide") au message MMS M1 correspondant à la notification, puis insertion dans celle-ci du ou des éléments multimédias choisis par l'utilisateur pour personnaliser la notification de la réception du message (étape S13). Le client MMS 2 ajoute un champ de notification dans l'en-tête du message dont la fonction sera décrite plus loin en détail (étape S14).

Le client MMS 2 envoie ensuite le message MMS M1 ainsi composé au centre MMS 11 auquel il est associé (étape S15). En pratique, l'échange du message MMS M1 entre le client MMS 2 et le centre MMS 11 correspond à une requête de soumission d'un message M1 du terminal 1 au centre 11 et à un accusé de réception de cette requête.

Dans l'exemple considéré, l'utilisateur B' appartient à un environnement MMS 20 différent de l'environnement 10 de l'utilisateur A. Le centre MMS 11 de l'environnement MMS 10 transmet alors le message MMS M1 au centre MMS 21 de l'environnement MMS 20 qui accuse réception (étape S2). Le centre MMS 21 notifie au client MMS 6 de l'utilisateur B' qu'un message M1 est à sa disposition (étape S3). Le client MMS 6 télécharge le message MMS M1 sur le terminal 5 (étape S4). Le client MMS 6 notifie à l'utilisateur B' l'arrivée du nouveau message MMS M1 (étape S5) en utilisant l'élément de notification inséré dans le message M1 par l'utilisateur A lors de l'étape S1 (i.e. étapes S11 à S15 de la figure 4) décrite précédemment.

La figure 5 décrit les étapes de traitement réalisées par le client MMS 6 du terminal 5 pour notifier la réception du message MMS M1. Une fois le message MMS M1 reçu sur le terminal 5 (étape S51), le client MMS 6 détermine si un champ de notification est présent dans l'en-tête du message (étape S52). Si ce n'est pas le cas, le message MMS M1 sera traité comme un message MMS classique (étape S53). Si un champ de notification est présent dans l'en-tête du message MMS M1, le client MMS 6 vérifie la valeur attribuée à ce champ (étape S54). Si la valeur indique qu'il n'y a pas de page contenant d'éléments de notification dans le message (ex. champ "Notification-Mode"=0), le message MMS M1 sera traité comme un message MMS classique (étape S53). Si, au contraire, la valeur du champ correspond à une indication qu'une page SLn contenant un ou plusieurs éléments de notification ENn est présente dans le message (ex. champ "Notification-Mode"=1), le client MSS 6 récupère le ou les éléments de notification ENn contenus dans la page (étape S55) et notifie la réception du message à l'utilisateur B' de façon personnalisée en utilisant le ou les éléments ENn récupérés (étape S56). Enfin, le client MMS joue le message MMS de façon classique (étape S57).

Pour permettre la prise en compte de l'élément de notification notamment par le client MMS 4 du terminal B destinataire du message, l'invention propose d'ajouter dans l'en-tête des messages MMS un nouveau champ : "Notification-Mode" de type booléen. Pour assurer une compatibilité ascendante avec les équipements MMS actuels (terminaux MMS, serveurs MMS-Center), ce champ de notification est conditionnel. En effet, ce champ ne sera présent uniquement que dans le cas où le terminal destinataire supporte la fonctionnalité décrite par la présente invention, comme expliqué plus loin.

Ce nouveau champ de notification devra être présent dans les différentes transactions définies dans les normes MMS (normes 3GPP TS 22.140 : Multimedia Messaging Service (MMS), stage 1 et 3GPP TS 23.140: Multimedia Messaging Service (MMS), stage 2). Il devra être présent au moins sur les interfaces MM1 (interface normalisée entre le terminal et le centre MMS ("MMS-Center")), MM4 (interface normalisée entre deux centres MMS) et MM7 (interface normalisée entre les fournisseurs de contenus et le centre MMS) (figure 1).

Conformément à la présente invention, pour pouvoir prendre en compte l'élément de notification, le client MMS d'un terminal doit être capable de détecter le champ de notification "Notification-Mode" et d'exécuter les actions nécessaires en réponse à la valeur de ce champ. Lorsque le champ de notification "Notification-Mode" est absent de la transaction, le message MMS doit être traité de manière classique. Dans ce cas, il n'y a aucune modification du comportement du terminal destinataire.

Lorsque le champ "Notification-Mode" est présent dans la transaction, il peut prendre uniquement les valeurs 0 ou 1. Le tableau ci-dessous résume les actions à exécuter par le client MMS sur le terminal destinataire en fonction de la valeur du champ de notification "Notification-Mode" :

| ***Valeur du champ* "Notification-Mode "** | ***Traitements requis sur le terminal destinataire du message*** | |
|---|---|---|
| 0 | Cas d'un message MMS "classique" : le terminal destinataire doit notifier la réception de ce message de manière classique, c'est-à-dire comme défini par son utilisateur. | |
| 1 | Cas d'un message MMS dont une page SLn ("slide") (figure 2) contient les informations nécessaires à la notification de sa réception sur le terminal destinataire. | |
| | Le terminal destinataire doit dans ce cas : | |
| | | - extraire les différents éléments multimédia contenus dans ladite page SLn du message reçu, |
| | | - utiliser ces éléments multimédias pour notifier à l'utilisateur l'arrivée de ce message, |
| | | - lorsque le message est joué à l'utilisateur destinataire, la page SLn contenant l'élément de notification ne sera pas jouée. |

L'élément de notification peut correspondre à la dernière page du corps du message. Cette convention est définie identiquement dans tous les clients MMS des terminaux pour permettre à ceux-ci de trouver systématiquement l'élément de notification dans le message MMS reçu. Toutefois, les clients MMS de la présente invention ne sont pas limités à cette convention et peuvent très bien être paramétrés avec une convention qui définie que l'élément de notification est la première page du corps d'un message MMS ou une autre page. Dans la suite de la description, on considérera que l'élément de notification correspond à la dernière page du corps d'un message MMS.

Pour éviter d'encombrer inutilement la mémoire du terminal du destinataire, le message MMS M1 reçu sera stocké dans la mémoire du terminal sans son élément de notification, ici la dernière page.

Selon un aspect de l'invention, la fonctionnalité permettant la notification de la réception d'un message sur le terminal du destinataire suivant un élément de notification défini à partir du terminal de l'émetteur peut être activée ou désactivée aussi bien sur le terminal de l'émetteur du message que sur celui du destinataire du message. L'utilisateur active/désactive cette fonctionnalité en paramétrant le client MMS de son terminal.

Si l'utilisateur A, émetteur du message, a activé cette fonctionnalité, il peut soit définir un mode de notification de la réception des messages qui sera utilisé pour tous ses envois de messages, soit un mode de notification différent pour chaque message composé.

Si l'utilisateur B, destinataire du message, a activé cette fonctionnalité, la notification de la réception d'un message se fera à l'aide des éléments multimédia déterminés par l'utilisateur A (conformément au procédé décrit ci-dessus). En revanche, si l'utilisateur B a désactivé cette fonctionnalité, la notification de la réception d'un message se fera de manière classique, c'est-à-dire suivant lés paramètres de notification configurés sur le terminal de l'utilisateur B.

Le procédé et le système de la présente invention peuvent être appliqués à l'envoi de messages MMS comme décrit plus haut, mais aussi plus généralement à tout type de message et en particulier les messages courts de type SMS ("Short Message Service").

Dans le cas particulier de l'envoi d'un message SMS, le terminal émetteur de l'utilisateur A envoie un message MMS dont le corps comporte deux pages (deux "slides") :
- une première page SL1 contenant le texte du message SMS que souhaite envoyer l'émetteur,
- une seconde page SL2 contenant les informations nécessaires à la notification de sa réception sur le terminal destinataire.

Le traitement sur le terminal destinataire de l'utilisateur B est identique au cas de l'envoi d'un MMS. Plus précisément, à la réception du message MMS, le client MMS du terminal destinataire détecte le champ de notification et constate que sa valeur indique que la dernière page SL2 contient un élément de notification. Il notifie alors l'arrivée du message à l'utilisateur B en traitant la dernière page SL2 du corps du message (élément de notification) sur son terminal. Puis, à la demande de lecture du message par l'utilisateur B, il traite (i.e. affiche) la première page SL1 du message conformément à la lecture classique d'un message MMS, cet élément correspondant au message SMS.

Dans le cas où le terminal du destinataire ne supporte pas la fonctionnalité, le centre MMS peut être programmé pour supprimer la dernière page ("slide") correspondant à l'élément de notification pour ne laisser le corps du message MMS qu'avec son contenu propre. A cet effet, une nouvelle règle est ajoutée dans le module d'adaptation de contenu du centre MMS.

La figure 6 montre les étapes de traitement réalisées par un centre MMS lorsqu'il transmet le message MMS au terminal destinataire (ex. lors de l'étape S3 de la figure 3). Lorsque le centre MMS reçoit le message MMS à transmettre au terminal destinataire (étape S31), il interroge le terminal destinataire avant le téléchargement du message MMS pour recevoir l'identité du terminal (étape S32). A partir de l'identité du terminal reçus, le centre MMS détermine si le terminal destinataire est compatible avec la fonctionnalité de notification personnalisée (étape S33). Si ce n'est pas le cas, le centre MMS supprime le champ de notification "Notification-Mode" de l'en-tête du message ainsi que la page SLn contenant le ou les éléments de notification ENn (étape S34), le message ainsi modifié étant ensuite téléchargé vers le terminal du destinataire (étape S35'). Dans le cas où le terminal destinataire supporte la fonctionnalité de notification personnalisée, le message est téléchargé tel quel (i.e. avec le champ de notification et la page contenant le(s) élément(s) de notification) vers le terminal du destinataire (étape S35).

Par ailleurs, la présente invention est décrite en relation avec des systèmes d'échange de messages MMS comprenant des terminaux mobiles. Toutefois, ces systèmes peuvent aussi comprendre des terminaux fixes aptes à envoyer/recevoir des messages MMS. A cet effet, il suffit que le terminal fixe soit équipé d'un client MMS similaire à celui embarqué sur les terminaux mobiles.

Par conséquent, la présente invention permet d'apporter des nouvelles fonctionnalités dans la personnalisation de la notification de réception de messages sans impliquer de profondes modifications dans les systèmes d'échanges de messages MMS existants. En effet, les modifications sont uniquement logicielles et consistent à adapter principalement les clients MMS (ex. ajouts de patchs), les modules de traitements des centres MMS tels que le module d'adaptation (ex. ajouts nouvelles règles) ainsi qu'au moins les interfaces normalisées MM1, MM4 et MM7 pour assurer la transmission du champ de notification présent dans l'en-tête des messages.

Exemple d'entête de message MMS contenant le champ Notification-Mode sur l'interface MM1 :
Date: Mon, 3 Oct 2005 16:29:45 +0100 (MET)
From: 0612345678
Message-Id: <200202041529@mmsc-service.com>
X-Mms-Message-Type: m-send-req
X-Mms-Transaction-ID: 612278480
X-Mms-Version: 1.0
To: 0601020304
Subject: News !!!
X-Mms-Message-Class: personal
X-Mms-Expiry: 10509389855
X-Mms-Priority: normal
X-Mms-Delivery-Report: no
X-Mms-Read-Reply: no
Notification-Mode: 1

## Revendications

1. Procédé de notification de la réception d'un message comprenant une étape de composition du message à partir d'un premier terminal (1) et une étape d'envoi du message à au moins un second terminal, **caractérisé en ce qu'**il comprend en outre, avant l'étape d'envoi dudit message, une étape d'insertion d'une page (SLn) contenant au moins un élément de notification (ENn) dans ledit message à partir du premier terminal (1) et, après l'étape d'envoi dudit message, une étape de notification de réception dudit message sur le second terminal (3) au moyen de l'élément de notification inséré dans le message.

2. Procédé selon la revendication 1 **caractérisé en ce que** le message est un message MMS.

3. Procédé selon la revendication 2, **caractérisé en ce qu'**il comprend, avant l'étape d'insertion de l'élément de notification (ENn) dans le message, une étape de formation de l'élément de notification réalisée par sélection ou création d'un ou plusieurs éléments multimédias à partir du premier terminal (1).

4. Procédé selon la revendication 2 ou 3, **caractérisé en ce qu'**il comprend en outre, avant l'étape d'envoi du message MMS, une étape d'ajout d'un champ de notification dans l'en-tête (MMS-H) du message MMS, la notification de réception dudit message MMS sur le second terminal (3) au moyen de l'élément de notification étant réalisée en fonction de la valeur du champ ajouté dans l'en-tête du message.

5. Procédé selon l'une quelconque des revendications 2 à 4, **caractérisé en ce que** le message MMS envoyé par le premier terminal (1) au second terminal (3) transite par un centre MMS (11) et **en ce que** le procédé comprend en outre une étape d'interrogation du second terminal (3) par le centre MMS pour vérifier la capacité dudit terminal à notifier la réception du message au moyen de l'élément de notification (ENn) inséré dans le message et une étape de suppression de l'élément de notification dans le message MMS par le centre MMS (11) en cas de vérification négative.

6. Procédé selon l'une quelconque des revendications 2 à 5, **caractérisé en ce que** le corps (MMS-B) du message MMS comprend un élément correspondant à un message court de type SMS.

7. Système de notification de la réception d'un message comprenant au moins deux terminaux (1, 3) entre lesquels sont échangés des messages, **caractérisé en ce que** les terminaux comprennent des moyens pour insérer un élément de notification (ENn) dans le message et des moyens pour notifier la réception dudit message sur un terminal destinataire en utilisant l'élément de notification transmis avec le message.

8. Système selon la revendication 7, **caractérisé en ce que** le message est un message MMS et **en ce que** les messages sont échangés via au moins un centre MMS (11).

9. Système selon la revendication 8, **caractérisé en ce que** les terminaux (1, 3) comprennent en outre des moyens pour ajouter un champ de notification dans l'en-tête du message MMS et des moyens pour détecter le champ de notification à la réception du message, la notification de réception dudit message MMS sur le terminal destinataire (3) au moyen de l'élément de notification (ENn) étant réalisée en fonction de la valeur du champ ajouté dans l'en-tête du message.

10. Système selon la revendication 8 ou 9, **caractérisé en ce que** le centre MMS (11) comprend des moyens pour vérifier la capacité du terminal destinataire à notifier la réception du message au moyen de l'élément de notification (ENn) inséré dans le message MMS et des moyens pour supprimer l'élément de notification dans le message MMS en cas de vérification négative.

11. Programme client destiné à être embarqué sur un terminal comprenant des instructions pour permettre la composition, l'envoi et la réception de messages, **caractérisé en ce qu'**il comprend en outre des instructions pour insérer un élément de notification (ENn) dans le message.

12. Programme selon la revendication 11, **caractérisé en ce que** le programme client comprend un client MMS (2; 4) et **en ce que** les messages sont des messages MMS.

13. Programme selon la revendication 12, **caractérisé en ce qu'**il comprend en outre des instructions pour notifier la réception d'un message MMS sur le terminal en utilisant l'élément de notification (ENn) transmis avec le message MMS.

14. Programme selon la revendication 12 ou 13, **caractérisé en ce qu'**il comprend en outre des instructions pour ajouter automatiquement un champ de notification dans l'en-tête (MMS-H) du message MMS.

15. Programme selon la revendication 14, **caractérisé en ce qu'**il comprend en outre des instructions pour détecter le champ de notification à la réception d'un message MMS, la notification de réception dudit message MMS sur le terminal au moyen de l'élément de notification (ENn) étant réalisée en fonction de la valeur du champ ajouté dans l'en-tête du message.

16. Terminal **caractérisé en ce qu'**il comprend un programme client selon l'une des revendications 11 à 15.

## Claims

1. Method of notifying the receipt of a message comprising a step in which a message is composed from a first terminal (1) and a step in which the MMS message is sent to at least one second terminal, **characterized in that** it also comprises, before the step in which said MMS message is sent, a step in which a page (SLn) containing at least one notification element (ENn) is inserted into said message from the first terminal (1) and, after the step in which said message is sent, a step in which receipt of said message on the second terminal (3) is notified by means of the notification element inserted into the message.

2. Method according to Claim 1, **characterized in that** said message is an MMS message.

3. Method according to Claim 2, **characterized in that** it comprises, before the step in which the notification element (ENn) is inserted into the message, a step in which the notification element is formed by the selection or creation of one or more multimedia elements from the first terminal (1).

4. Method according to Claim 2 or 3, **characterized in that** it also comprises, before the step in which the MMS message is sent, a step in which a notification field is added to the header (MMS-H) of the MMS message, the notification of receipt of said MMS message on the second terminal (3) by means of the notification element being provided according to the value of the field added to the header of the message.

5. Method according to any one of Claims 2 to 4, **characterized in that** the MMS message sent by the first terminal (1) to the second terminal (3) passes through an MMS centre (11) and **in that** the method also comprises a step in which the second terminal (3) is interrogated by the MMS centre to check the capacity of said terminal to notify the receipt of the message by means of the notification element (ENn) inserted into the message and a step in which the notification element is deleted from the MMS message by the MMS centre (11) in the event of a negative check.

6. Method according to any one of Claims 1 to 4, **characterized in that** the body (MMS-B) of the MMS message comprises an element corresponding to a short message of SMS type.

7. System for notifying the receipt of a message comprising at least two terminals (1, 3) between which messages are exchanged, **characterized in that** the terminals comprise means for inserting a notification element (ENn) into an MMS message and means for notifying the receipt of said message on a recipient terminal by using the notification element transmitted with the MMS message.

8. System according to Claim 7, **characterized in that** said message is an MMS message and **in that** said message are exchanged via at least one MMS centre (11).

9. System according to Claim 8, **characterized in that** the terminals (1, 3) also comprise means for adding a notification field to the header of the MMS message and means for detecting the notification field on receipt of the message, the notification of receipt of said MMS message on the recipient terminal (3) by means of the notification element (ENn) being provided according to the value of the field added to the header of the message.

10. System according to Claim 8 or 9, **characterized in that** the MMS centre (11) comprises means for checking the capacity of the recipient terminal to notify the receipt of the message by means of the notification element (ENn) inserted into the MMS message and means for deleting the notification element from the MMS message in the event of a negative check.

11. Client program designed to be embedded on a terminal comprising instructions to allow messages to be composed, sent and received, **characterized in that** it also comprises instructions for inserting a notification element (ENn) into said message.

12. Program according to Claim 11, **characterized in that** the client program comprises an MMS client (2; 4) and **in that** said messages are MMS messages.

13. Program according to Claim 12, **characterized in that** it also comprises instructions for notifying the receipt of an MMS message on the terminal by using the notification element (ENn) transmitted with the MMS message.

14. Program according to Claim 12 or 13, **characterized in that** it also comprises instructions for automatically adding a notification field to the header (MMS-H) of the MMS message.

15. Program according to Claim 14, **characterized in that** it also comprises instructions for detecting the notification field on receipt of an MMS message, the notification of receipt of said MMS message on the terminal by means of the notification element (ENn) being provided according to the value of the field added to the header of the message.

16. Terminal, **characterized in that** it comprises a client program according to one of Claims 11 to 15.

## Patentansprüche

1. Verfahren zur Benachrichtigung über den Empfang einer Mitteilung, das einen Schritt des Verfassens der Mitteilung ausgehend von einem ersten Endgerät (1) und einen Schritt des Sendens der Mitteilung an mindestens ein zweites Endgerät aufweist, **dadurch gekennzeichnet, dass** es außerdem vor dem Schritt des Sendens der MMS-Mitteilung einen Schritt des Einfügens einer Seite (SLn), die mindestens ein Benachrichtigungselement (ENn) enthält, in die MMS-Mitteilung ausgehend vom ersten Endgerät (1), und nach dem Schritt des Sendens der Mitteilung einen Schritt der Benachrichtigung über den Empfang der MMS-Mitteilung im zweiten Endgerät (3) mittels des in die Mitteilung eingefügten Benachrichtigungselements enthält.

2. Verfahren nach Anspruch 1, **dadurch gekennzeichnet, dass** die Mitteilung eine MMS-Mitteilung ist.

3. Verfahren nach Anspruch 2, **dadurch gekennzeichnet, dass** es vor dem Schritt des Einfügens des Benachrichtigungselements (ENn) in die Mitteilung einen Schritt der Formatierung des Benachrichtigungselements enthält, der durch Auswahl oder Erzeugung eines oder mehrerer Multimedia-Elemente ausgehend vom ersten Endgerät (1) durchgeführt wird.

4. Verfahren nach Anspruch 2 oder 3, **dadurch gekennzeichnet, dass** es außerdem vor dem Schritt des Sendens der MMS-Mitteilung einen Schritt des Einfügens eines Benachrichtigungsfelds in die Kopfzeile (MMS-H) der MMS-Mitteilung enthält, wobei die Benachrichtigung über den Empfang der MMS-Mitteilung im zweiten Endgerät (3) mittels des Benachrichtigungselements in Abhängigkeit vom Wert des in die Kopfzeile der Mitteilung eingefügten Felds durchgeführt wird.

5. Verfahren nach einem der Ansprüche 2 bis 4, **dadurch gekennzeichnet, dass** die vom ersten Endgerät (1) an das zweite Endgerät (3) gesendete MMS-Mitteilung über ein MMS-Zentrum (11) geht, und dass das Verfahren außerdem einen Schritt der Abfrage des zweiten Endgeräts (3) durch das MMS-Zentrum, um die Kapazität des Endgeräts, über den Empfang der Mitteilung mittels des in die Mitteilung eingefügten Benachrichtigungselements (ENn) zu benachrichtigen, zu überprüfen, und im Fall einer negativen Überprüfung einen Schritt des Löschens des Benachrichtigungselements in der MMS-Mitteilung durch das MMS-Zentrum (11) enthält.

6. Verfahren nach einem der Ansprüche 2 bis 5, **dadurch gekennzeichnet, dass** der Körper (MMS-B) der MMS-Mitteilung ein Element entsprechend einer Kurzmitteilung vom Typ SMS enthält.

7. System zur Benachrichtigung über den Empfang einer Mitteilung, das mindestens zwei Endgeräte (1, 3) enthält, zwischen denen Mitteilungen ausgetauscht werden, **dadurch gekennzeichnet, dass** die Endgeräte Einrichtungen, um ein Benachrichtigungselement (ENn) in die Mitteilung einzufügen, und Einrichtungen enthalten, um über den Empfang der Mitteilung in einem Ziel-Endgerät zu benachrichtigen, indem das mit der Mitteilung übertragene Benachrichtigungselement verwendet wird.

8. System nach Anspruch 7, **dadurch gekennzeichnet, dass** die Mitteilung eine MMS-Mitteilung ist und dass die Mitteilungen über mindestens ein MMS-Zentrum (11) ausgetauscht werden.

9. System nach Anspruch 8, **dadurch gekennzeichnet, dass** die Endgeräte (1, 3) außerdem Einrichtungen, um ein Benachrichtigungsfeld in die Kopfzeile der MMS-Mitteilung einzufügen, und Einrichtungen enthalten, um das Benachrichtigungsfeld bei Empfang der Mitteilung zu erfassen, wobei die Benachrichtigung über den Empfang der MMS-Mitteilung im Ziel-Endgerät (3) mittels des Benachrichtigungselements (ENn) in Abhängigkeit vom Wert des in die Kopfzeile der Mitteilung eingefügten Felds durchgeführt wird.

10. System nach Anspruch 8 oder 9, **dadurch gekennzeichnet, dass** das MMS-Zentrum (11) Einrichtungen, um die Kapazität des Ziel-Endgeräts, über den Empfang der Mitteilung mittels des in die MMS-Mitteilung eingefügten Benachrichtigungselements (ENn) zu benachrichtigen, zu überprüfen, und Einrichtungen enthält, um im Fall einer negativen Überprüfung das Benachrichtigungselement in der MMS-Mitteilung zu löschen.

11. Client-Programm das dazu bestimmt ist, in ein Endgerät eingefügt zu werden, das Anweisungen enthält, um das Verfassen, das Senden und den Empfang von Mitteilungen zu erlauben, **dadurch gekennzeichnet, dass** es außerdem Anweisungen enthält, um ein Benachrichtigungselement (ENn) in die MMS-Mitteilung einzufügen.

12. Programm nach Anspruch 9, **dadurch gekennzeichnet, dass** das Client-Programm ein MMS-Client Programm (2; 4) enthält und dass die Mitteilungen MMS-Mitteilungen sind.

13. Programm nach Anspruch 12, **dadurch gekennzeichnet, dass** es außerdem Anweisungen enthält, um über den Empfang einer MMS-Mitteilung in dem Endgerät zu benachrichtigen, indem das mit der MMS-Mitteilung übertragene Benachrichtigungselement (ENn) verwendet wird.

14. Programm nach Anspruch 12 oder 13, **dadurch gekennzeichnet, dass** es außerdem Anweisungen enthält, um automatisch ein Benachrichtigungsfeld in die Kopfzeile (MMS-H) der MMS-Mitteilung einzufügen.

15. Programm nach Anspruch 14, **dadurch gekennzeichnet, dass** es außerdem Anweisungen enthält, um das Benachrichtigungsfeld bei Empfang einer MMS-Mitteilung zu erfassen, wobei die Benachrichtigung über den Empfang der MMS-Mitteilung im Endgerät mittels des Benachrichtigungselements (ENn) in Abhängigkeit vom Wert des in die Kopfzeile der Mitteilung eingefügten Felds durchgeführt wird.

16. Endgerät, **dadurch gekennzeichnet, dass** es ein Client-Programm nach einem der Ansprüche 11 bis 15 enthält.
